# EUROPEAN PATENT SPECIFICATION

(11) **EP 1 350 072 B1**
(45) Date of publication and mention of the grant of the patent: **13.07.2005**
(21) Application number: 01273228.5
(22) Date of filing: 28.12.2001
(51) Int. Cl.: F41G 1/30

(54) **OPTICAL SIGHT**
OPTISCHE VISIEREINRICHTUNG
VISEUR OPTIQUE

(30) Priority: 09.01.2001 SE 0100050
(43) Date of publication of application: 08.10.2003
(73) Proprietor: GS DEVELOPMENT AB, 213 75 Malmö (SE)
(72) Inventor: HAKANSON, Hakan, S-224 56 Lund (SE); WIKLUND, Ralf, S-260 35 Ödakra (SE)
(74) Representative: Karlsson, Leif
(86) International application number: PCT/SE2001/002918
(87) International publication number: WO 2002/055950

(56) References cited:
- EP-A1- 0 545 527
- WO-A1-99/19665
- US-A- 4 346 995

## Description

### Background of the invention

### Field of the invention

The invention relates to an optical sight used for example on a hunting weapon such as a hunting gun.

More particularly the invention relates to a sight of the kind comprising an elongate housing defining a light channel; a lens located at one end of the light channel and having a partially, reflecting surface; and an energised light source located in the light channel for emitting light towards said reflecting surface to produce a light spot by direct imaging of said light source on said surface to be superimposed on a target when sighting through the light channel from the other end thereof. A sight of this kind is disclosed in WO 99/19665.

### Description of related art

The main problem with prior art sights of the kind referred to herein is low battery life (approximately four hours of continuous use at the brightest spot intensity). As a result, the user must replace the battery at regular short intervals. This can lead to various practical problems especially if the user is in some remote location and batteries are not readily available.

Weapon sights of the kind referred to wherein the light source comprises a light emitting diode, LED, have been available for approximately 20 years. US-A-4 346 995 issued Aug. 31, 1982 discloses a sight wherein the light source comprises an LED. In these sights the intensity of the light spot is controlled by varying the drive current of the LED.

A normal LED comprises a chip with a p-type semiconductor layer and an n-type semiconductor layer in a sandwich structure. When a forward current is supplied the entire chip is lighted up and the emitted light is spread in all directions. The size of these semiconductor chips is of the order of 300 µm x 300 µm, the thickness thereof being about 100 µm. This means that the light source has a light emitting surface which is 300 µm x 300 µm. In order to obtain a proper light spot in an optical sight of the kind referred to the desired light emitting surface should be a circular spot with a diameter of about 60 to 80 µm, which means that the LED must provide a narrow and distinct beam of light and that it accordingly is necessary to screen off the light emitting surface. For this purpose it is customary to use a mask with a narrow preferably circular aperture as described in WO 99/19665. The efficiency of a light source of this type is not satisfactory. The utilised portion of the light emitting surface of the LED will be only about 1/20 of the total light emitting surface light energy emitted by the rest of said surface being wasted. However, with the same light intensity as provided by a conventional light source the current required by the light source will be decreased by a factor of approximately 20 by using an LED resulting in a corresponding increase of the battery life.

SE-B-378 450 and SE-B-449 262 teach that in order to save energy, the LED should be pulsed. Although such an arrangement increases the battery life of the sight, the resulting sight still has a low battery life of approximately forty hours of continuous use at the brightest spot intensity.

According to PCT/SE99/2482 in order to increase many times the battery life in an optical sight of the kind referred to a laser diode is provided as the light source therein. By using a laser diode the battery life will be increased to more than 5000 hours at continuous use.

### Brief summary of the invention

According to the invention an optical sight of the kind referred to herein comprises a battery for energising the light source and in order to increase many times the battery life a resonant cavity light emitting diode, RCLED, is provided as the light source in the sight.

An RCLED is formed by doping a small specific p-type semiconductor area into an n-type chip of the same size as mentioned above. The doped area forms a cavity, and light is emitted from this cavity only, which means that light energy is saved. By surfaces with specific reflective index created around the doped cavity in order to reflect back the emitted light into the cavity, most of the light will be emitted in one direction for further light energy saving.

The RCLED has been designed for optical data communications over plastic optical fibres and so far has been used exclusively for this purpose. By using an RCLED in a sight of the kind referred to herein, which is a new use thereof, the diode current surprisingly will be about 35 times lower than the diode current in a device according to WO 99/19665 which means that the sight will be completely maintenance-free as far as the power supply is concerned.

Conventional electronics can be used for controlling the intensity of the RCLED.

Preferred details of the sight of the invention are defined in the dependent claims.

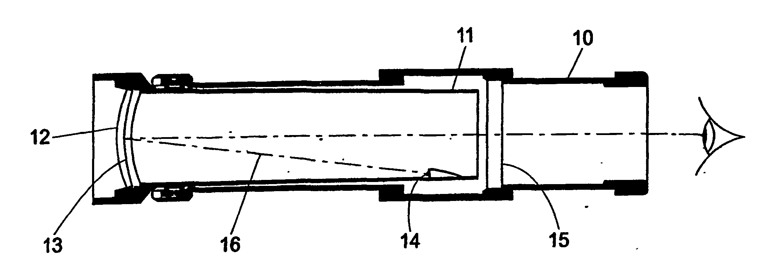

### Brief description of the drawing

In order to explain the invention in more detail an illustrative embodiment thereof will be described below reference being made to the accompanying drawing in which the figure is an axial cross sectional view of a sight of the invention.

### Detailed description of the invention

The weapon sight disclosed in the drawing comprises a light tunnel formed by an outer tube 10 to be fastened to the barrel of a weapon on which the sight shall be used, and an inner tube 11 which is mounted in the outer tube at one end and is fixed at the other end by adjustment means allowing adjustment of the longitudinal axis of the inner tube in relation to the longitudinal axis of the outer tube as is necessary in order to adapt the sight to the weapon on which it is used. In said one end of the inner tube a double lens 12 is provided having a layer 13 between the lenses, said layer reflecting red light. Inside the inner tube a light source 14 comprising a resonant cavity light emitting diode, RCLED, is mounted, e. g. a 1A4871 Chip RCLED from Mitel Semiconductors. The RCLED has an apertured light-impermeable mask on or adjacent the light emitting surface of the RCLED, preferably a mask that is vaporised or sputtered on the light emitting surface, to project a beam of red light with minimal dispersion on the layer 13 where the light beam forms a red spot to be used as an aiming point. The light beam is reflected by the layer 13 through a face-ground glass plate 15 having an anti-reflection layer on the side thereof facing the right end of the light tunnel. The light path is indicated by a dot-and-dash line 16. The RCLED is energised via electronic drive circuitry by a battery (not shown) which can be mounted in a closed housing integral with the outer tube 10, the battery being electrically connected with the drive circuitry for the RCLD by conductors. A suitable battery for use in the sight of the invention is a lithium cell DL1/3N having a capacity of 160 mAh.

## Claims

1. An optical sight comprising:
an elongate housing (10, 11) defining a light channel;
a lens (12) located at one end of the light channel and having a partially reflecting surface (13);
a light source (14) located in the light channel for emitting light towards said reflecting surface to produce a light spot by direct imaging of said light source on said surface to be superimposed on a target when sighting through the light channel from the other end thereof; and a battery for energising the light source, **characterised in that** the light source (14) comprises a resonant cavity light emitting diode.

2. The optical sight of claim 1 wherein the light emitting surface of the resonant cavity light emitting diode is covered by an apertured light-impermeable mask located on or adjacent the light emitting surface.

3. The optical sight of claim 2 wherein the mask is vaporised or sputtered on the light emitting surface.

## Patentansprüche

1. Ein optisches Visier umfassend:
ein längliches Gehäuse (10, 11), das einen Lichtkanal festlegt;
eine Linse (12), die am einen Ende des Lichtkanals gelegen ist und eine teilweise reflektierende Oberfläche (13) aufweist;
eine Lichtquelle (14), die sich im Lichtkanal befindet, zum Aussenden von Licht zu der genannten reflektierenden Oberfläche, um einen Lichtpunkt durch direkte Abbildung der genannten Lichtquelle auf der genannten Oberfläche zu erzeugen, welche mit einem Ziel überlagert wird, wenn es durch den Lichtkanal von dessen anderem Ende anvisiert wird; sowie eine Batterie zur Energieversorgung der Lichtquelle, **dadurch gekennzeichnet, dass** die Lichtquelle (14) eine lichtemittierende Diode mit Resonanzkavität umfasst.

2. Optisches Visier gemäß Anspruch 1, wobei die lichtemittierende Oberfläche der lichtemittierenden Diode mit Resonanzkavität mit einer mit Öffnung versehenen lichtundurchlässigen Maske an oder angrenzend an die lichtemittierende Oberfläche abgedeckt ist.

3. Optisches Visier gemäß Anspruch 2, wobei die Maske auf die lichtemittierende Oberfläche aufgedampft oder aufgesputtert ist.

## Revendications

1. Viseur optique comprenant :
un boîtier allongé (10, 11) définissant un canal de lumière ;
une lentille (12) située à une extrémité du canal de lumière et ayant une surface en partie réfléchissante (13) ;
une source lumineuse (14) située dans le canal de lumière, permettant de diffuser la lumière vers ladite surface réfléchissante afin de produire un point lumineux en produisant directement l'image de ladite source lumineuse sur ladite surface pour qu'elle se superpose à une cible quand on regarde au travers dudit canal de lumière depuis l'autre extrémité de celui-ci ; et une batterie permettant d'activer la source lumineuse, **caractérisé en ce que** la source lumineuse (14) comprend une diode électroluminescente à cavité résonnante.

2. Viseur optique selon la revendication 1, dans lequel la surface émettrice de lumière de la diode électroluminescente à cavité résonnante est recouverte d'un masque imperméable à la lumière perforé, situé sur ou en étant adjacent à la surface émettrice de lumière.

3. Viseur optique selon la revendication 2, dans lequel le masque est vaporisé ou pulvérisé sur la surface émettrice de lumière.
